Europäisches Patentamt

(19) European Patent Office

Office européen des brevets

(11) Numéro de publication : **0 247 939 B1**

(12) **FASCICULE DE BREVET EUROPEEN**

(45) Date de publication du fascicule du brevet :
02.05.91 Bulletin 91/18

(51) Int. Cl.⁵ : **B23Q 17/22, G05B 19/18,**
**G01B 21/10**

(21) Numéro de dépôt : **87401177.8**

(22) Date de dépôt : **25.05.87**

(54) **Machine pour le réglage automatique de la longueur de sortie et du diamètre d'un outil.**

(30) Priorité : **26.05.86 FR 8607476**

(43) Date de publication de la demande :
**02.12.87 Bulletin 87/49**

(45) Mention de la délivrance du brevet :
**02.05.91 Bulletin 91/18**

(84) Etats contractants désignés :
**BE CH DE ES GB IT LI NL SE**

(56) Documents cités :
**DE-A- 2 518 466**
**DE-U- 8 522 361**
**FR-A- 2 103 548**
**FR-A- 2 440 572**
**US-A- 3 124 976**
**US-A- 3 701 199**
**US-A- 4 117 943**
**US-A- 4 507 850**
**METALWORKING PRODUCTION, vol. 124, no.**
**9, septembre 1980, page 123,127, London, GB;**
**"Automatic tool sizing for autochangers"**

(73) Titulaire : **AEROSPATIALE SOCIETE**
**NATIONALE INDUSTRIELLE Société**
**Anonyme dite:**
**37, Boulevard de Montmorency**
**F-75016 Paris (FR)**

(72) Inventeur : **Lamotte, Lionel**
**27 rue de la Libération**
**F-80300 Dernancourt Albert (FR)**
Inventeur : **Mirey, Jean-Claude**
**60 rue des Marais**
**F-80300 Treux Albert (FR)**
Inventeur : **Omiel, Jean**
**Englebelmer**
**F-80300 Albert (FR)**
Inventeur : **Gaquere, Jean-Pierre**
**Avenue de la Gare Mailly Maillet**
**F-80560 Acheux en Amienois (FR)**

(74) Mandataire : **Bonnetat, Christian et al**
**CABINET BONNETAT 23, Rue de Léningrad**
**F-75008 Paris (FR)**

## Description

La présente invention concerne une machine pour le réglage automatique et la mesure de la longueur de sortie et du diamètre d'un outil, monté dans un mandrin conique et susceptible de coopérer avec un cône de réception de la machine, ainsi que pour la mesure du diamètre dudit outil.

La machine est plus particulièrement adaptée aux outils de coupe, tels que par exemple les fraises à queue cylindrique lisse montées chacune dans un mandrin conique pourvu d'une percée axiale débouchante, recevant la queue cylindrique lisse de la fraise. Le mandrin conique comporte, de façon connue, des moyens de serrage de l'outil, ainsi qu'un moyen de réglage logé dans la percée axiale et contre lequel vient en contact la queue de l'outil.

L'ensemble constitué par le mandrin conique et l'outil est destiné à être agencé, une fois les opérations de réglage et de mesure effectuées, dans une des broches ou têtes d'usinage d'une machine-outil à commande numérique. Ce type de machine-outil multi-broche est de plus en plus répandu dans les ateliers de fabrication pour des raisons économiques de productivité, de qualité d'usinage, de fiabilité et de coût, puisqu'elles permettent, par exemple, de réaliser des usinages identiques sur une même pièce ou sur une pluralité de pièces solidaires de la table de la machine-outil, à partir des ensembles mentionnés ci-dessus montés chacun dans une des broches de la machine-outil.

Ainsi, pour obtenir des usinages identiques et éviter le rebut des pièces usinées hors cote, il est impératif, avant le montage de chaque ensemble s'adaptant dans un cône de réception de la broche, de régler et de mesurer avec précision, aux tolérances près, la longueur de sortie de chaque outil par rapport à une référence du mandrin et le diamètre de chacun des outils.

Actuellement, les opérations de réglage et de mesure, pour ce type d'outils déterminés que sont les fraises à queue cylindrique lisse, s'effectuent manuellement en agissant sur le moyen de réglage, tel qu'une vis, par l'intermédiaire d'un tournevis, ce qui permet d'ajuster la cote ou longueur de sortie de la fraise par rapport au mandrin. La mesure est ensuite faite au moyen d'un réglet et d'un comparateur, puis l'opérateur, à l'aide d'une clé, agit sur le moyen de serrage, tel qu'un écrou, venant ainsi bloquer la fraise par l'intermédiaire d'une douille élastique fendue, laquelle maintient la queue de la fraise. Lors du serrage de l'écrou par l'opérateur, la fraise a tendance à descendre avec la douille, ce qui peut modifier la longueur de sortie de la fraise, notamment dans le cas où l'opérateur exerce un couple de serrage supérieur à celui théoriquement prévu.

Ces opérations, décrites succintement, sont à renouveler pour chaque ensemble d'outil et de mandrin destiné à équiper les broches de la machine-outil à commande numérique. Préalablement à leur montage respectif dans lesdites broches, ces ensembles sont passés sur un banc de mesure indiquant les longueurs de sortie et le diamètre des fraises. Lorsque, par exemple, la longueur de sortie d'un outil ne correspond pas à la longueur demandée, l'ensemble doit être à nouveau réglé manuellement.

En conséquence, l'ensemble des opérations, réalisées pour la plupart manuellement, pour effectuer le réglage et la mesure de la longueur et du diamètre de chaque fraise dans son mandrin respectif nécessite plusieurs postes de travail, un matériel approprié pour chacun de ces postes, ainsi qu'un personnel affecté à ces opérations et demande un temps important.

On remarquera que, par le document US-A-4 177 943, on connaît déjà une machine pour le réglage et la mesure de la longueur de sortie d'un outil monté dans un mandrin susceptible de coopérer avec une douille de réception de ladite machine, ledit mandrin étant pourvu d'une percée axiale débouchante destinée à recevoir ledit outil, et comportant un moyen de serrage dudit outil, ainsi qu'un moyen de réglage dudit outil logé dans ladite percée axiale, ledit outil venant en contact avec ledit moyen de réglage, ladite machine comportant un bâti et deux chariots montés mobiles sur ledit bâti et susceptibles de se déplacer respectivement parallèlement et transversalement à l'axe dudit outil, le premier desdits chariots comprenant un premier moyen de commande agissant sur ledit moyen de serrage, et un second moyen de commande agissant sur ledit moyen de réglage, tandis que le second desdits chariots comprend un moyen de détection et de mesure dudit outil permettant, lorsque ledit outil vient au contact dudit moyen, de mesurer la longueur de sortie de l'outil par rapport au mandrin.

La présente invention a pour but de remédier aux contraintes décrites ci-dessus et de perfectionner ladite machine connue pour permettre, préalablement au montage de chaque ensemble constitué d'un outil et d'un mandrin dans les broches de la machine-outil, le réglage automatique et la mesure de la longueur de sortie de chaque outil, ainsi que la mesure de leur diamètre, ladite machine étant équipée d'un cône de réception identique à celui dont sont pourvues les broches de la machine-outil.

A cet effet, selon l'invention, la machine du type rappelé ci-dessus, est caractérisée en ce que le premier desdits chariots comprend ladite douille de réception, qui se présente sous la forme d'un cône recevant ledit mandrin, également de forme conique, muni de l'outil, ainsi qu'un moyen de traction destiné à saisir ledit mandrin conique pour le maintenir pressé contre ledit cône de réception dudit chariot, en ce que la mise en contact de l'outil contre ledit moyen de détection s'effectue par ledit moyen de réglage, et en ce que ladite machine comporte :

– un programmateur dans lequel sont programmées les opérations de réglage et de mesure s'effectuant selon un cycle automatique préalablement établi,

– un clavier de commande pour l'introduction de données spécifiques dans ledit programmateur, et

– un afficheur recevant un signal dudit moyen de détection et de mesure correspondant à une grandeur représentative de la longueur de sortie dudit outil, et indiquant ladite longueur.

Ainsi, grâce à l'invention, une fois l'outil monté dans le mandrin conique, puis l'ensemble introduit dans le cône de réception correspondant de la machine, et les données spécifiques entrées dans le programmateur, l'opérateur agit sur un bouton de mise en marche situé sur le clavier de commande, et sans aucune autre intervention de cet opérateur, la machine règle, puis mesure, la longueur de sortie de l'outil selon le cycle automatique préalablement établi. A cause dudit moyen de traction, l'opérateur est sûr que ledit mandrin est dans la même configuration d'accostage avec le cône femelle que sur la machine.

Dans un mode préféré de réalisation, ledit moyen de traction est constitué par un tirant creux apte à venir se fixer dans l'extrémité dudit mandrin conique par l'intermédiaire d'un moteur disposé sur ledit chariot et commandant le mouvement dudit tirant, ce dernier enveloppant ladite tige.

Selon une autre caractéristique de l'invention, les deux chariots montés mobiles sur le bâti se déplacent orthogonalement l'un par rapport à l'autre.

Dans un mode préféré de réalisation, ledit premier moyen de commande du premier chariot, susceptible d'agir sur le moyen de serrage, est constitué d'un moteur coopérant au moyen d'engrenages avec un profil denté correspondant ménagé sur le moyen de serrage.

Ainsi, la valeur du couple de serrage fourni par le moteur et exercé sur le moyen de serrage est identique pour chaque ensemble d'outil et de mandrin. Ledit moyen de serrage de chaque ensemble occupe alors toujours la même position une fois cet ensemble introduit dans le cône de réception. En conséquence, cette position est avantageusement déterminée pour qu'elle se trouve à une distance du moyen de détection et de mesure correspondant à la longueur de sortie désirée de l'outil.

Dans un mode préféré de réalisation, le second moyen de commande susceptible d'agir sur ledit moyen de réglage logé dans ledit mandrin conique peut être constitué par une tige dont une extrémité coopère avec ledit moyen de réglage et dont l'autre extrémité est reliée à un moteur disposé sur ledit chariot.

Dans un mode de réalisation avantageux, ledit moyen de détection et de mesure dudit outil, disposé sur le second chariot, est constitué par un palpeur de mesure contre lequel est susceptible de venir s'appliquer la face frontale dudit outil. Ainsi, lorsque ladite face frontale de l'outil, par l'intermédiaire dudit moyen de réglage, vient au contact dudit palpeur, celui-ci, par exemple relié audit moteur, commande le moyen de réglage, coupe ledit moteur et émet vers l'afficheur, un signal correspondant à une grandeur représentative de la longueur de sortie dudit outil.

Ladite machine selon l'invention permet non seulement de régler et de mesurer la longueur de sortie dudit outil, mais encore de mesurer le diamètre dudit outil.

A cet effet, ledit second chariot comporte un moyen de mesure permettant d'effectuer la mesure du diamètre dudit outil.

Dans un mode préféré de réalisation, ledit moyen de mesure du diamètre dudit outil est constitué d'un capteur optique disposé sur ledit second chariot, le signal de sortie dudit capteur correspondant à une grandeur représentative du diamètre dudit outil étant adressé audit afficheur.

Avantageusement, un calculateur relié audit afficheur permet d'effectuer, d'une part, la moyenne desdites longueurs de sortie d'une série d'outils réglés et mesurés, et, d'autre part, la moyenne des diamètres mesurées de ladite série d'outils.

Ainsi, l'opérateur est averti dans le cas où un outil d'une même série aurait une longueur de sortie différente de la longueur moyenne affectée d'une tolérance déterminée. Il en va de même concernant les diamètres mesurés des outils.

Les figures du dessin annexé feront bien comprendre comment l'invention peut être réalisée. Des références identiques désignent des éléments semblables.

La figure 1 représente, en demi coupe axiale et en demi vue extérieure, un outil monté dans un mandrin conique.

La figure 2 représente une vue simplifiée de la machine selon l'invention, comportant ledit outil monté dans ledit mandrin.

Les figures 3, 4, 5 et 6 sont des vues partielles schématiques illustrant certaines phases du cycle automatique de ladite machine.

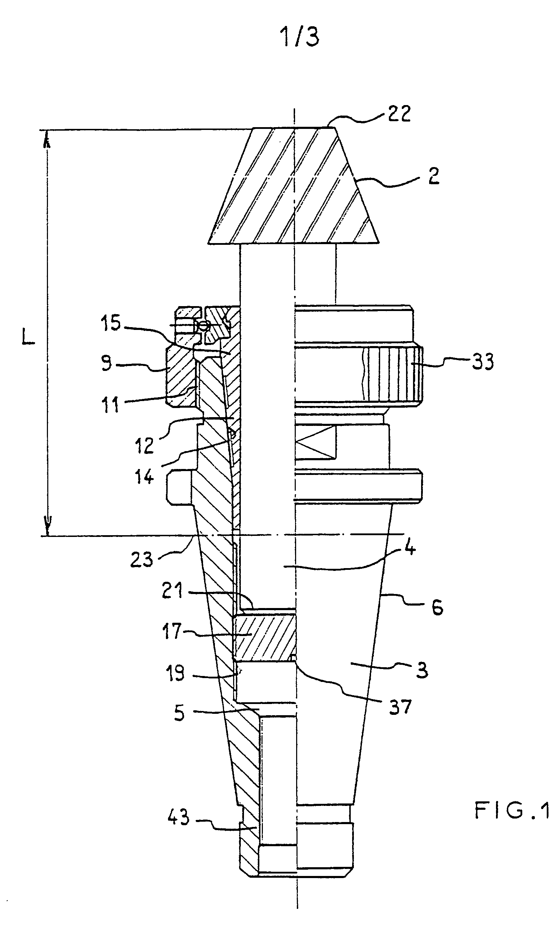

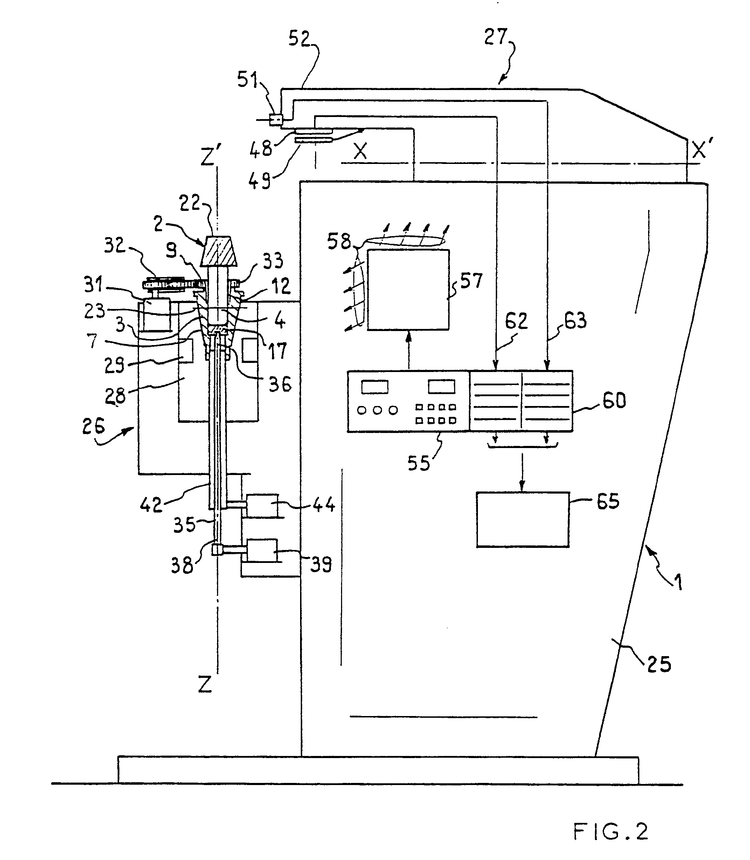

La machine 1 selon l'invention (figure 2), est destinée à régler et à mesurer la longueur de sortie d'un outil 2 dans un mandrin conique 3 et à mesurer également le diamètre dudit outil (voir la figure 1). Celui-ci est une fraise à queue cylindrique lisse 4, laquelle est introduite dans une percée axiale débouchante 5 ménagée dans le mandrin conique 3. Le profil conique extérieur 6 du mandrin est susceptible de coopérer avec un cône de réception femelle 7 de la machine 1.

Le mandrin 3 comporte un moyen de serrage de l'outil constitué d'un écrou 9 vissé sur une partie extérieure 11 du mandrin, et coopérant avec une douille fendue 12, logée dans une partie conique 14 complémentaire terminant une extrémité 15 de la percée axiale débouchante 5. La douille conique 12 vient se presser, lors du serrage de l'écrou, contre la partie conique 14, puis se plaquer sur la queue cylindrique 4 de la fraise 2. Le mandrin 3 comporte un moyen de réglage, tel qu'une vis 17, coopérant avec une partie filetée 19 pratiquée dans la percée axiale 5. Cette vis 17, contre laquelle vient s'appliquer la face extrême 21 de la queue cylindrique 4, permet ainsi le réglage de la longueur de sortie L de la fraise par rapport à une référence déterminée. Cette longueur de sortie L, que l'on veut obtenir pour chacun des ensembles constitué respectivement d'un mandrin et d'une fraise, est par exemple celle comprise entre la face frontale 22 de la fraise 2 et la référence 23 du cône.

Comme on peut le voir sur la figure 2, la machine 1 est constituée principalement d'un bâti 25 fixé au sol et de deux chariots 26 et 27 montés mobiles par rapport au bâti 25. Les deux chariots sont disposés orthogonalement l'un par rapport à l'autre. Le premier chariot 26 est susceptible de se déplacer suivant un axe sensiblement vertical Z-Z' et le second chariot 27 est susceptible de se déplacer suivant un axe sensiblement horizontal X-X'. Tous deux peuvent coulisser dans des glissières non représentées sur la figure, grâce à des moteurs prévus à cet effet, mais non représentés.

Le premier chariot 26 comporte le cône de réception 7 recevant le mandrin conique 3 qui porte la fraise 2. Ce cône est solidaire d'une broche 28 correspondant à celles montées sur la machine-outil à commande numérique précitée, destinée à recevoir chaque ensemble de mandrin et de fraise. La broche 28 est mûe en rotation, autour de l'axe Z-Z', par un moteur 29.

Le chariot 26 comporte un premier moyen de commande agissant sur l'écrou de serrage 9. Ce premier moyen de commande permet de visser l'écrou 9 de chaque ensemble avec un couple de serrage identique déterminé théoriquement, et est constitué schématiquement d'un moteur 31 agencé sur le premier chariot 26 et coopérant, par exemple au moyen d'engrenages 32, avec un profil denteté 33 ménagé sur l'écrou 9 de serrage.

Le chariot 26 comporte un second moyen de commande susceptible d'agir sur la vis de réglage 17 du mandrin 3. Le second moyen de commande est constitué par une tige 35 dont une extrémité 36 coopère avec l'empreinte 37 ménagée sur la face de la vis 17, opposée à celle en contact avec la face extrême 21 de la queue 4 de fraise. Cette tige 35 est couplée à son autre extrémité 38 avec un moteur 39, schématiquement illustré, solidaire du chariot 26, et dont la fonction est d'assurer la rotation de la tige 35, autour de l'axe Z-Z' entraînant le réglage de la sortie de la fraise 2 par l'intermédiaire de la vis 17.

De plus, des moyens de traction du mandrin 3 dans le cône de réception 7 sont prévus dans ledit premier chariot 26, et sont constitués par un tirant 42 apte à venir coopérer avec l'extrémité 43 de la percée axiale 5, pour saisir ledit mandrin conique 3.

Le tirant 42 est commandé en rotation par un moteur 44 solidaire du chariot 26, lequel tirant 42 enveloppe, sans la toucher, la tige 35.

Le second chariot 27 comprend un moyen de détection et de mesure, par exemple un palpeur électronique 48, permettant, lorsque la face frontale 22 de la fraise 2 vient au contact du palpeur, d'émettre un signal correspondant à la valeur de la longueur de sortie de la fraise, la mise à la longueur de la fraise s'effectuant par la tige 35 mûe par le moteur 39 et agissant sur la vis de réglage 17. L'axe du palpeur 48 se trouve alors confondu avec l'axe Z-Z' du chariot 26 correspondant à l'axe du cône de réception 7. De plus, au palpeur électronique 48 est associé un cache-palpeur escamotable 49.

Le second chariot 27 comprend de plus, un moyen de mesure du diamètre de la fraise agencé sur l'extrémité 52 de ce second chariot 27 et susceptible d'émettre un signal correspondant à la valeur du diamètre relevé.

Sur le bâti 25 de la machine est disposé un clavier de commande 55 permettant à l'opérateur d'introduire plusieurs données spécifiques dans un programmateur 57 relié au clavier 55, et dont le programme a été préalablement déterminé, puis mémorisé dans celui-ci.

L'opérateur introduit notamment le nombre de fraises à régler et à mesurer dans une série, le type de cône utilisé, la longueur de sortie des fraises, identique pour toutes, hors du mandrin conique respectif et le diamètre théorique de la fraise. La machine est capable ensuite d'exécuter un cycle automatique grâce à ce programmateur 57, permettant de régler la longueur de sortie de chaque fraise associée à son mandrin conique, de mesurer cette longueur et de mesurer également le diamètre de la fraise. Les sorties 58 du programmateur (représentées schématiquement) sont reliées aux divers moteurs et asservissements de la machine.

La longueur de sortie L, qui doit être identique pour chaque ensemble de fraise et de mandrin d'une même série, est déterminée préalablement en fonction des usinages à réaliser sur les pièces disposées sur la table de travail de la machine-outil à commande numérique, et est introduite par l'opérateur dans le cycle programmé dans le programmateur 57 au moyen du clavier de commande 55. La cote qui définit la longueur de sortie L de la fraise est comprise entre la face frontale 22 de celle-ci et la référence du cône 23. Ainsi, la cote est obtenue lorsque la face frontale 22 de la fraise vient au contact du palpeur de mesure 48, la référence du cône devant se trouver à une distance correspondant à cette cote. La position de la référence du cône 23 doit alors être connue, puis programmée dans le programmateur, afin que le premier chariot 26, recevant le mandrin conique 3 dans le cône de réception 7, s'arrête dans une position pour laquelle la référence du cône 23 de l'écrou se trouve à une distance du palpeur de mesure 48 correspondant à la longueur de sortie L déterminée de la fraise, lorsque celle-ci vient au contact par sa face frontale 22 du palpeur 48. Lors du montage de la fraise dans la percée axiale 5, la face frontale 22 de celle-ci sort d'une longueur inférieure par rapport à la référence du cône 23, la mise à la longueur de sortie L de la fraise étant obtenue par la vis de réglage 17.

La position de référence du cône est déterminée préalablement par la liaison conique entre le mandrin conique mâle 3 et le cône de réception femelle 7, tous deux de conicité correspondante. Ce type de liaison conique est normalisé avec des tolérances extrêmement serrées, ce qui signifie que lors de la mise en place du mandrin conique dans le cône de réception, ce mandrin conique se positionne toujours de façon identique dans ce cône. Ainsi, on est sûr que, pour tous les mandrins coniques d'un même type disposés successivement dans le cône de réception, ceux-ci occupent tous la même position dans le cône de réception. La machine selon l'invention comporte un afficheur 60, par exemple intégré au clavier de commande 55, recevant d'une part, un signal 62 émis par le palpeur de mesure 48 et correspondant à une grandeur représentative de la longueur de sortie L de la fraise 2, et d'autre part, un signal émis par le capteur optique 51 et correspondant à une grandeur représentative du diamètre mesuré de la fraise.

Avantageusement, un calculateur 65 relié à l'afficheur 60 enregistre lesdites valeurs relevées et permet d'effectuer ensuite d'une part, la moyenne des longueurs de sortie L des fraises affichées dans l'afficheur d'une série, et d'autre part, la moyenne des diamètres D relevés et affichés.

Ainsi, le calculateur indique si l'une des longueurs de sortie des fraises est en dehors des tolérances fixées par l'opérateur en ce qui concerne la valeur de la moyenne des longueurs de sortie. Il en va de même si l'un des diamètres relevés est en dehors des tolérances fixées pour la valeur de la moyenne des diamètres.

Le cycle de fonctionnement de la machine selon l'invention illustré par les figures 2, 3, 4, 5 et 6 est le suivant :

Les fraises identiques d'une série sont chacune mises en place dans un mandrin conique correspondant au cône de réception de la machine. L'opérateur entre dans le programmateur 57, au moyen du clavier de commande 55, les données relatives au nombre de fraises à régler dans la série, au type de cône, à la longueur de réglage de sortie des fraises et au diamètre théorique des fraises.

Il introduit le premier ensemble, constitué d'une fraise 2 logée dans un mandrin conique 3, dans le cône de réception 7 de la machine. La liaison conique entre le cône mâle 3 et le cône femelle 7 permet d'obtenir le même positionnement pour tous les mandrins 3 dans ledit cône de réception 7. Il valide le cycle de fonctionnement automatique de la machine programmée dans le programmateur 57. Le premier chariot 26 se trouve en position basse dans les glissières et le second chariot 27 se trouve en position de recul dans les glissières (figure 2). Le cycle débute par la mise en marche du moteur 44 entraînant en rotation le tirant 42, ce qui a pour conséquence d'assurer correctement, par exemple par vissage du tirant dans l'extrémité 43 filetée de la percée axiale 5 du mandrin conique 3, l'accostage du mandrin dans le cône de réception 7 en reproduisant ainsi de façon semblable l'accostage du mandrin dans l'une des broches de la machine-outil à commande numérique.

Le mandrin conique 3 étant maintenu dans cette position, le moteur 44 s'arrête, puis le moteur 39 démarre permettant la rotation autour de l'axe Z-Z' de la tige 35 L'extrémité 36 de celle-ci coopère avec l'empreinte 37 ménagée dans la vis de réglage 17, jusqu'à ce que la vis vienne en butée contre un épaulement agencé dans la percée axiale 5. La vis 17 se trouve ainsi en position basse, afin de permettre l'enfoncement maximal de la fraise 2, laquelle s'appuie par la queue 4 contre la face 21 de la vis 17.

Le moteur 39 s'arrête, puis le programme permet de déclencher le moteur 31 du moyen de serrage de l'écrou 9. Par l'intermédiaire du jeu d'engrenage 32 coopérant avec le profil denté 33 de l'écrou 9, celui-ci est serré à un couple déterminé. Le serrage de l'écrou presse la partie conique de la douille élastique 12 contre la partie conique 14 de la percée axiale, ce qui a pour conséquence de plaquer la douille 12 contre le profil extérieur de la queue 4.

Ensuite, le moteur 31 tourne en sens inverse pour desserrer légèrement l'écrou 9, autorisant ainsi le glissement sans jeu de la queue 4 de la fraise par rapport à la douille 12 et donc au mandrin conique 3. Alors, le second chariot 27 mû par son moteur se déplace jusqu'à ce que l'axe du palpeur 48 soit coaxial et confondu avec l'axe Z-Z' de l'ensemble fraise et mandrin logé dans le cône de réception 7.

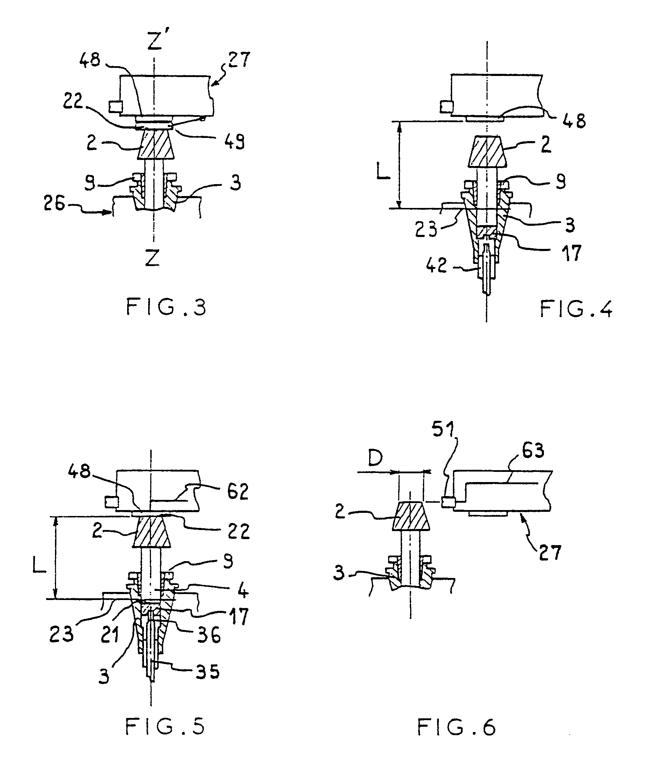

Le premier chariot 26 est alors actionné de façon que la face frontale 22 de la fraise 2 vienne en contact, puis s'appuie contre le cache-palpeur 49 (figure 3). La fraise est ainsi en butée contre la face 21 de la vis 17.

Le premier chariot 26 descend par une rotation inverse du moteur jusqu'à la position déterminée précédemment, c'est-à-dire celle correspondant à la position de la référence du cône située à une distance du palpeur correspondant à la longueur de sortie L de la fraise (figure 4). Le chariot 26 est donc dans une position pour laquelle la référence du cône 23, prise comme origine de la longueur de sortie de la fraise lorsque l'écrou 4 est serré à son couple de serrage, est à une cote du palpeur 48 correspondant à la longueur L affichée par l'opérateur.

Le chariot occupe ainsi cette position définie dans le programmateur, puis le moteur 39 est à nouveau en action dans un sens opposé à sa précédente rotation provoquant la montée de la fraise par l'intermédiaire de la rotation de la tige 35 coopérant avec la vis de réglage 17. La montée de la fraise continue jusqu'au moment où la face frontale 22 vient en contact du palpeur 48, dont le cache-palpeur 49 a été préalablement escamoté. Le contact de la face frontale 22 de la fraise 2 avec le palpeur 48 provoque le ralentissement, puis l'arrêt du moteur 39 et donc la rotation de la tige 35 et de la vis 17 (figure 5). A cet effet, le palpeur est par exemple directement relié au moteur 39.

Le cycle continue par la descente du premier chariot 26 dans sa position initiale précédente pour supprimer le contact entre la fraise et le palpeur, et bloquer l'écrou 9 au couple de serrage déterminé.

La longueur de sortie L de la fraise est alors vérifiée. Pour cela, le premier chariot 26 est remonté jusqu'à ce que la face frontale de la fraise vienne au contact du palpeur. Un signal 62 délivré par le palpeur et correspondant à une grandeur représentative de la longueur de sortie de la fraise est adressé à l'afficheur 60, lequel indique la valeur de la longueur de sortie de la fraise. Cette valeur est également introduite dans le calculateur 65.

La descente du chariot 26 et le recul du chariot 27 sont ensuite programmés. Le moteur 29 de la broche 28 du cône de réception 7 est alors mis en marche, entraînant en rotation autour de l'axe Z-Z' le mandrin conique 3 et la fraise 2. La montée du chariot 26 mû par son moteur s'effectue ensuite jusqu'à une cote préalablement déterminée, puis mémorisée dans le programmateur 57, pour la lecture du diamètre de la fraise. Le second chariot 27 coulisse dans ses glissières selon l'axe X-X' jusqu'à ce que le capteur optique 51 (figure 6) se trouve en regard de la fraise 2 pour mesurer son diamètre. Un signal de sortie 63, délivré par le capteur 51 et correspondant à une grandeur représentative du diamètre de la fraise, est adressé à l'afficheur 60 et au calculateur 65. Lorsque la mesure est effectuée, le chariot 27 recule et le chariot 26 descend par la mise en action de leur moteur respectif, jusqu'à la position initiale du début de cycle. Le moteur 44 est ensuite commandé pour désolidariser le tirant 42 du mandrin conique 3. Le cycle est alors terminé, la longueur de sortie étant mesurée et affichée, ainsi que le diamètre de la fraise.

L'opérateur retire cet ensemble, puis introduit un nouvel ensemble et ce jusqu'au dernier ensemble de la série.

L'afficheur 60 indique alors les mesures de longueur de sortie et de diamètre pour chaque fraise des ensembles constituant la série. Le calculateur 65 effectue d'une part, la moyenne des longueurs de fraise réglées et mesurées et d'autre part, la moyenne des diamètres de fraises.

La moyenne des longueurs est indiquée avec une tolérance déterminée et dans le cas où la longueur d'une des fraises serait différente de la cote moyenne affectée de la tolérance admise, la longueur de sortie de cette fraise serait alors à nouveau réglée par la machine.

Egalement, la moyenne des diamètres est indiquée avec une tolérance déterminée et dans le cas où le diamètre d'une des fraises différerait du diamètre moyen affecté de la tolérance, la fraise serait rejetée et remplacée par un autre qui serait à son tour réglée et mesurée par la machine.

Une fois la série de fraises réglées et mesurées, la machine est prête pour le réglage d'une série suivante.

Dans le cas où le type de cône et donc la conicité est modifiée, il suffit d'adapter un nouveau cône de réception correspondant au cône du mandrin conique.

La série d'ensembles ainsi réglés est alors apte à être montée dans les broches de la machine-outil à commande numérique.

## Revendications

1. Machine pour le réglage et la mesure de la longueur de sortie d'un outil (2) monté dans un mandrin (3) susceptible de coopérer avec une douille de réception (7) de ladite machine, ledit mandrin étant pourvu d'une percée axiale débouchante (5) destinée à recevoir ledit outil (2), et comportant un moyen de serrage (9) dudit outil, ainsi qu'un moyen de réglage (17) dudit outil logé dans ladite percée axiale, ledit outil (2) venant en contact avec ledit moyen de réglage (17), ladite machine comportant un bâti (25) et deux chariots montés mobiles sur ledit bâti et susceptibles de se déplacer respectivement parallèlement et transversalement à l'axe dudit outil (2), le premier desdits chariots (26) comprenant un premier moyen de commande (31, 32) agissant sur ledit moyen de serrage (9), et un second moyen de commande (35, 39) agissant sur ledit moyen de réglage (17), tandis que le second desdits chariots (27) comprend un moyen de détection et de mesure (48) dudit outil permettant, lorsque ledit outil vient au contact dudit moyen (48), de mesurer la longueur de sortie de l'outil (2) par rapport au mandrin, caractérisée en ce que le premier desdits chariots (26) comprend ladite douille de réception (7), qui se présente sous la forme d'un cône recevant ledit mandrin, également de forme conique, muni de l'outil, ainsi qu'un moyen de traction (42, 44) destiné à saisir ledit mandrin conique (3) pour le maintenir pressé contre ledit cône de réception (7) dudit chariot, en ce que la mise en contact de l'outil contre ledit moyen de détection s'effectue par ledit moyen de réglage, et en ce que ladite machine comporte

– un programmateur (57) dans lequel sont programmées les opérations de réglage et de mesure s'effectuant selon un cycle automatique préalablement établi,

– un clavier de commande (55) pour l'introduction de données spécifiques dans ledit programmateur, et

– un afficheur (60) recevant un signal (63) dudit moyen de détection et de mesure (48) correspondant à une grandeur représentative de la longueur de sortie dudit outil, et indiquant ladite longueur.

2. Machine selon la revendication 1, caractérisée en ce que ledit moyen de traction est constitué par un tirant creux (42) apte à venir se fixer dans l'extrémité (43) dudit mandrin conique (3) par l'intermédiaire d'un moteur (44) disposé sur ledit chariot (26) et commandant le mouvement dudit tirant, ce dernier enveloppant ladite tige (35).

3. Machine selon l'une des revendications 1 ou 2, caractérisée en ce que les deux chariots (26 et 27) montés mobiles sur le bâti (25) se déplacent orthogonalement l'un par rapport à l'autre.

4. Machine selon l'une des revendications 1 à 3, caractérisée en ce que ledit premier moyen de commande susceptible d'agir sur le moyen de serrage (9) est constitué d'un moteur (31) coopérant au moyen d'engrenages (32) avec un profil denté correspondant (33) ménagé sur le moyen de serrage (9).

5. Machine selon l'une des revendications 1 à 4, caractérisée en ce que ledit second moyen de commande susceptible d'agir sur ledit moyen de réglage (17) logé dans ledit mandrin conique (3) est constitué par une tige (35) dont une extrémité (36) coopère avec ledit moyen de réglage et dont l'autre extrémité (38) est reliée à un moteur (39) disposé sur ledit chariot (26).

6. Machine selon l'une des revendications 1 à 5, caractérisée en ce que ledit moyen de détection et de mesure (48) dudit outil, disposé sur le second chariot (27), est constitué par un palpeur de mesure (48) contre lequel est susceptible de venir s'appliquer la face frontale (22) dudit outil (2).

7. Machine selon la revendication 6, caractérisée en ce qu'un cache palpeur escamotable (49) est monté sur ledit palpeur de mesure (48).

8. Machine selon l'une quelconque des revendications 1 à 7, caractérisée en ce que ledit second chariot (27) comporte, de plus, un moyen de mesure (51) permettant d'effectuer la mesure du diamètre dudit outil (2).

9. Machine selon la revendication 8, caractérisée en ce que ledit moyen de mesure du diamètre dudit outil est constitué d'un capteur optique (51) disposé sur ledit second chariot (27), le signal de sortie dudit capteur (51) correspondant à une grandeur représentative du diamètre dudit outil (2) étant adressé audit afficheur.

10. Machine selon l'une des revendications précédentes, caractérisée en ce qu'un calculateur (65) relié audit afficheur (60) permet d'effectuer, d'une part, la moyenne desdites longueurs de sortie d'une série d'outils réglés et mesurés, et, d'autre part, la moyenne des diamètres mesurés de ladite série d'outils.

11. Machine selon l'une des revendications précédentes, caractérisée en ce que lesdites données spécifiques introduites par le clavier de commande (55) dans ledit programmateur concernent le nombre d'outils d'une série, le type de cône utilisé, la longueur de sortie des outils dans leur mandrin conique respectif et le diamètre de l'outil.

## Ansprüche

1. Maschine zur Regelung und Messung der Ausgangslänge eines Werkzeuges (2), das in einem Futter (3) eingespannt ist, das mit einer Aufnahmebuchse (7) der Maschine zusammenarbeiten kann, wobei des Futter mit einer ausmündenden axialen Bohrung (5) versehen ist, die das Werkzeug (2) aufnehmen soll, und eine Einspanneinrichtung (9) des Werkzeuges sowie eine Regelungseinrichtung (17) des in der axialen Bohrung sitzenden Werkzeuges (2) aufweist, das mit der Regelungseinrichtung in Kontakt kommt, wobei die Maschine ein Gestell (25) sowie zwei auf dem Gestell beweglich eingesetzte Wagen aufweist, die parallel bzw. transversal zur Achse des Werkzeuges (2) verschiebbar sind und von denen der erste Wagen (26) eine erste Steuerung (31, 32), die auf die Einspanneinrichtung (9) einwirkt, und eine zweite Steuerung (35, 39) besitzt, die auf die Regelungseinrichtung (17) einwirkt, und von denen der zweite Wagen (27) eine Einrichtung zum Abfühlen und Messen (48) des Werkzeuges besitzt, durch die ermöglicht wird, die Ausgangslänge des Werkzeugs (2) gegenüber dem Futter bei Inkontaktkommen des Werkzeuges mit der Einrichtung (48) zu messen, dadurch **gekennzeichnet**, daß der erste Wagen (26) die Aufnahmebuchse (7), die in Form eines Kegels ausgebildet ist, von dem das ebenfalls kegelförmig ausgebildete und mit dem Werkzeug bestückte Futter aufgenommen wird, sowie eine Antriebseinrichtung (42, 44) aufweist, von der das kegelförmige Futter (3) erfaßt werden soll, um es gegen die Aufnahmebuchse oder den Aufnahmekegel (7) des Wagens gedrückt zu halten, daß das Inkontaktbringen des Werkzeugs gegen die Einrichtung zum Abfühlen (48) von der Regelungseinrichtung durchgeführt wird, und daß die Maschine

– einen Ablaufplaner (57), in dem die Regelungs- und Messungsabläufe programmiert sind, die nach einem vorher festgelegten selbsttätigen Arbeitszyklus durchgeführt werden,
– eine Steuerungstastatur (55) für die Eingabe vorgeschriebener Daten in den Ablaufplaner und
– ein Anzeigegerät (60) aufweist, das ein Signal (63) der Einrichtung zum Abfühlen und Messen (48) empfängt, welches einer die Ausgangslänge des Werkzeugs darstellenäe Gräße entspricht und die Länge angibt.

2. Maschine nach Anspruch 1, dadurch **gekennzeichnet**, daß die Antriebseinrichtung aus einer hohlen Zugstange (42) Besteht, die am Ende (43) des kegelförmigen Futters (3) mit Hilfe eines auf dem Wagen (26) sitzenden und die Bewegung der Zugstange steuernden Motors (44) festgelegt werden kann, wobei die Zugstange den Schaft (35) umhüllt.

3. Maschine nach einem der vorhergehenden Ansprüche 1 oder 2, dadurch **gekennzeichnet**, daß die beiden auf dem Gestell (25) beweglich eingesetzten Wagen (26 und 27) senkrecht zueinander verschoben werden.

4. Maschine nach einem der vorhergehenden Ansprüche 1 bis 3, dadurch **gekennzeichnet**, daß die auf die Einspanneinrichtung (9) wirksam werdende Steuerung einen Motor (31) aufweist, der mittels Getriebe (32) mit einem auf der Einspanneinrichtung (9) angebrachten entsprechenden Kerbzahnprofil (33) zusammenarbeitet.

5. Maschine nach einem der vorhergehenden Ansprüche 1 bis 4, dadurch **gekennzeichnet**, daß die auf die im kegelförmigen Futter (3) sitzende Regelungseinrichtung (17) wirksam werdende zweite Steuerung einen Schaft (35) aufweist, dessen eine Ende (36) mit der Regelungseinrichtung zusammenarbeitet und dessen andere Ende (36) an einem auf dem Wagen (26) eingesetzten Motor (39) lieer :.

6. Maschine nach einem der vorhergehenden Ansprüche 1 bis 5, dadurch **gekennzeichnet**, daß die auf dem zweiten hagen (27) eingesetzte Einrichtung zum Abfühlen und Messen (48) des Werkzeugs einen Meßfühler (48) aufweist, gegen den die Stirnfläche (22) des Werkzeugs (2) anlegbar ist.

7. Maschine nach Anspruch 6, dadurch **gekennzeichnet**, daß eine einziehbare Fühlerabdeckung (49) auf dem Meßfühler (48) angebracht ist.

8. Maschine nach einem der vorhergehenden Ansprüche 1 bis 7, dadurch **gekennzeichnet**, daß der Wagen (27) darüber hinaus eine Meßeinrichtung (51) aufweist, von der die Messung des Werkzeugdurchmessers durchgeführt werden kann.

9. Maschine nach Anspruch 8, dadurch **gekennzeichnet**, daß die Einrichtung zum Messen des Werkzeugdurchmessers einen auf dem zweiten Wagen (27) eingesetzten optischen Sensor (51) aufweist, dessen Ausgangssignal, das einer den Durchmesser des Werkzeugs (2) darstellenden Gräße entspricht, an das Anzeigegerät adressiert wird.

10. Maschine nach einem der vorhergehenden Ansprüche 1 bis 9, dadurch **gekennzeichnet**, daß von einem mit dem Anzeigegerät (60) verbundenen Rechner (65) einerseits das Mittel der Ausgangslängen einer geregelten und gemessenen Werkzeugserie und andererseits das Mittel der gemessenen Durchmesser der Werkzeugserie genommen wird.

11. Maschine nach einem der vorhergehenden Ansprüche 1 bis 10, dadurch **gekennzeichnet**, daß die über die Steuerungstastatur (55) in den Ablaufplaner eingegebenen vorgeschriebenen Daten die Anzahl der Werkzeuge einer Serie, die Ausführung des verwendeten Kegels, die Ausgangslänge der Werkzeuge in ihrem jeweiligen kegelförmigen Futter sowie den Werkzeugdurchmesser betreffen.

## Claims

1. Machine for automatically adjusting and measuring the length of extension of a tool (2) mounted in a mandrel (3) capable of cooperating with a receiving socket (7) of said machine, said mandrel being provided with an opening axial tap (5) adapted to receive said tool (23), and comprising a means (9) for tightening said tool, as well as a means (17) for adjusting said tool housed in said axial tap, said tool (2) coming into contact with said adjustment means (17), said machine comprising a frame (25) and two carriages movably mounted on said frame, and capable of moving respectively parallel and traversely to the axis of said tool (2), the first of said carriages (26) comprising a first control means (31, 32) acting on said tightening means (9), and a second control means (35, 39) acting on said adjustment means (17), whereas the second of said carriages (27) comprises a means (48) for detecting and measuring said tool making it possible, when said tool comes into contact with said means (48), to measure the length of extension of the tool (2) with respect to the mandrel, characterized in that the first of said carriages (26) comprises said receiving socket (7), having the shape of a cone receiving said mandrel, also having a conical shape, provided with the tool, as well as a traction means (42, 44) intended to grip said conical mandrel (3) in order to maintain it pressed against said receiving cone (7) of said carriage, in that the placing of the tool in contact against said detection means is effected by said adjustment means, and in that said machine comprises

– a programmer (57) in which are programmed the operations of adjustment and measurement carried out in accordance with an automatic cycle established previously,
– a control Keyboard (55) for the introduction of specific data in said programmer, and
– a display means (60) receiving a signal (63) from said detection and measuring means (48), corresponding to a magnitude representative of the length of extension of said tool, and indicating said length.

2. Machine according to claim 1, characterized in that said traction means is constituted by a hollow tie-rod (42) adapted to be fixed in the end (43) of said conical mandrel (3) via a motor (44) disposed on said carriage (26) and controlling the movement of said tie-rod, the latter enveloping said rod (35).

3. Machine according to one of claims 1 or 2, characterized in that the two carriages (26 and 27) movably mounted on the frame (25) move at right angles with respect to each other.

4. Machine according to one of claims 1 to 3, characterized in that said first control means capable of acting on the tightening means (9) is constitued by a motor (31) cooperating by means of gear means (32) with a corresponding toothed profile (33) arranged on the tightening means (9).

5. Machine according to one of claims 1 to 4, characterized in that said second control means capable of acting on said adjustment means (17) housed in said conical mandrel (3) is constitued by a rod (35) of which one end (36) cooperate with said adjusment means and of which the other end (38) is connected to a motor (39) disposed on said carriage (26).

6. Machine according to one of claims 1 to 5, characterized in that said means (48) for detecting and measuring said tool, disposed on the second carriage (27), is constitued by a measuring sensor (48) against which the front face (22) of said tool (2) is capable of being applied.

7. Machine according to claim 6, characterized in that a retractable sensor cover (49) is mounted on said measuring sensor (48).

8. Machine according to one of claims 1 to 7, characterized in that said second carriage (27) comprises, moreover, a measuring means (51) making it possible to effect measurement of the diameter of said tool (2).

9. Machine according to claim 8, characterized in that said means for measuring the diameter of said tool is constituted by an optical sensor (51) disposed on said second carriage (27), the output signal of said sensor (51) corresponding to a magnitude representative of the diameter of said tool (2) being addressed to said display means.

10. Machine according to one of the preceding claims, characterized in that a computer (65) connected to said display means (60) makes it possible to effect, on the one hand, the average of said lengths of extension of a series of adjusted and measured tools, and, on the other hand, the average of the measured diameters of said series of tools.

11. Machine according to one of the preceding claims, characterized in that said specific data introduced via the keyboard (55) in said programmer, concern the number of tools of a series, the type of cone used, the length of extension of the tools in their respective conical mandrel and the diameter of the tool.

1/3

FIG.1

FIG.2

FIG.3

FIG.4

FIG.5

FIG.6